# EUROPEAN PATENT SPECIFICATION

(11) **EP 2 750 246 B1**
(45) Date of publication and mention of the grant of the patent: **26.12.2018**
(21) Application number: 11854524.3
(22) Date of filing: 24.11.2011
(51) Int. Cl.: H01Q 15/00, H01Q 15/08, H01Q 21/00, G02B 1/00

(54) **A DIVERGING ELECTROMAGNETIC WAVE META-MATERIAL**
METAMATERIAL FÜR DIVERGIERENDE ELEKTROMAGNETISCHE WELLEN
MÉTAMATÉRIAU À ONDE ÉLECTROMAGNÉTIQUE DIVERGENTE

(30) Priority: 23.08.2011 CN 201110242684
(43) Date of publication of application: 02.07.2014
(73) Proprietor: Kuang-chi Innovative Technology Ltd., ShenZhen, Guangdong 518034 (CN); Kuang-Chi Institute of Advanced Technology, Shenzhen, Guangdong 518057 (CN)
(72) Inventor: LIU, Ruopeng, Shenzhen Guangdong 518057 (CN); JI, Chunlin, Shenzhen Guangdong 518057 (CN); YUE, Yutao, Shenzhen Guangdong 518057 (CN); HONG, Yunnan, Shenzhen Guangdong 518057 (CN)
(74) Representative: Goddar, Heinz J.
(86) International application number: PCT/CN2011/082839
(87) International publication number: WO 2013/026238

(56) References cited:
- CN-A- 1 658 433
- CN-A- 1 690 827
- CN-A- 101 542 838
- CN-A- 101 557 039
- JP-A- 2009 086 166
- JP-A- 2011 112 942
- US-A1- 2010 033 389
- US-A1- 2010 067 091
- US-A1- 2011 069 377
- CHENG QIANG ET AL: "Broadband planar Luneburg lens based on complementary metamaterials", APPLIED PHYSICS LETTERS, AMERICAN INSTITUTE OF PHYSICS, US, vol. 95, no. 18, 2 November 2009 (2009-11-02), pages 181901-181901, XP012126305, ISSN: 0003-6951, DOI: 10.1063/1.3257375

## Description

### FIELD OF THE INVENTION

The present disclosure generally relates to a metamaterial, and more particularly, to a metamaterial for diverging an electromagnetic wave.

### BACKGROUND OF THE INVENTION

Apparatuses such as divergent antennae that are made of conventional materials can diverge electromagnetic waves, but have the following shortcomings: the volume thereof is bulky, which is unfavorable for miniaturization; they rely on the shape thereof heavily, which makes it difficult to design these apparatuses flexibly; and they suffer from a considerable loss and the media used are liable to aging, so the cost is high.

Nowadays, metamaterials are receiving increasing attention as a kind of new materials. The metamaterials refer to man-made composite structures or composite materials having supernormal physical properties that natural materials lack. Through structurally ordered design of critical physical dimensions of the materials, restrictions of some apparent natural laws can be overcome to obtain supernormal material functions that natural materials lack.

"Metamaterials" that have been developed so far include "left-handed materials", "photonic crystals", "meta-magnetic materials" and the like. Properties of the metamaterials are usually not primarily determined by intrinsic properties of the constitutional material, but by the man-made structures formed therein.

In order to achieve divergence of an electromagnetic wave, the following indicators among others must be satisfied:
1) High performance. The electromagnetic wave shall be diverged at high performances to approximate the desired divergence state.
2) Low loss. Energy of the electromagnetic wave shall be diverged at a high diverging efficiency to achieve the goal of energy saving.
3) Small dimensions. That is, the apparatuses shall not occupy a large space.

Furthermore, the method of diverging the electromagnetic wave shall be easy to be implemented without a complex design, and the cost of components shall not be too high.

The JP patent application JP 2009-086166 (D1) discloses a photonic crystal having a lens's character. The photonic crystal comprises a slab and a plurality of holes formed in the slab, the holes change such that the refractive index changes gradually in an orthogonal direction. However, D1 distinctly shows the diameter of the holes is changing along x axial direction symmetrically with respect to the center of the z axis, and z axis is the optical axis of the photonic crystal. That is, in D1, the refractive index is not changed in a circular form, and it changes along the x axis, and axially symmetrical with respect to the center of the z-axis.

The prior document, named as "Broadband planar Lunebury lens based on complementary metamaterials" (D2), shows a metamaterials-artificial materials, which comprises a plurality of complementary I-shaped unit cells. With the size of the I-shaped unit cells changes, the refractive index of the materials changes gradually. However, D2 distinctly shows the metamaterials-artificial materials is used as the 2D Luneberg lens with a gradient of decreasing refractive index radially out from its center.

### SUMMARY OF THE INVENTION

In view of the aforesaid shortcomings of the prior art, an objective of the present disclosure is to provide a metamaterial for diverging an electromagnetic wave that features a simple manufacturing process and a low cost and that is easy to be implemented.

To achieve the aforesaid objective, the present disclosure provides a metamaterial for diverging an electromagnetic wave, which comprises at least one metamaterial sheet layer. Refractive indices of the metamaterial sheet layer are distributed in a circular form about a center of the metamaterial sheet layer, and the refractive indices remain unchanged at a same radius and increase gradually as the radius increases. The metamaterial sheet layer comprises a plurality of metamaterial units, each of the metamaterial units comprises a substrate and microstructures disposed on the substrate, and the microstructures are man-made pores. All the man-made pores are filled with a medium material having a refractive index which is different from that of the substrate, and said refractive index is based on the man-made pores volume.

Preferably, for a same one of the metamaterial sheet layer, all the man-made pores are filled with a medium material having a refractive index which is smaller than that of the substrate, each of the metamaterial units comprises one man-made pore, the man-made pores of the metamaterial units at a same radius have a same volume, the man-made pores gradually decrease in volume as the radius increases, and the radius represents a distance from the respective metamaterial unit to the center of the metamaterial sheet layer.

Preferably, for a same one of the metamaterial sheet layer, all the man-made pores are formed of unit pores having a same volume and are filled with a medium material having a refractive index which is smaller than that of the substrate, a total volume of the man-made pores is the same for each of the metamaterial units at a same radius, the number of the unit pores in each of the man-made pores decreases gradually as the radius increases, and the radius represents a distance from the respective metamaterial unit to the center of the metamaterial sheet layer.

Preferably, for a same one of the metamaterial sheet layer, all the man-made pores are filled with a medium material having a refractive index which is greater than that of the substrate, each of the metamaterial units comprises one man-made pore, the man-made pores of the metamaterial units at a same radius have the same volume, the man-made pores gradually increase in volume as the radius increases, and the radius represents a distance from the respective metamaterial unit to the center of the metamaterial sheet layer.

Preferably, for a same one of the metamaterial sheet layer, all the man-made pores are formed of unit pores having a same volume and are filled with a medium material having a refractive index which is greater than that of the substrate, a total volume of the man-made pores is the same for each of the metamaterial units at a same radius, the number of the unit pores in each of the man-made pores increases gradually as the radius increases, and the radius represents a distance from the respective metamaterial unit to the center of the metamaterial sheet layer.

Preferably, for a same one of the metamaterial sheet layer, the man-made pores all have a same volume, the medium material filled at a same radius has the same refractive index, the refractive index of the medium material filled in the man-made pores increases gradually with the radius, and the radius represents a distance from the respective metamaterial unit to the center of the metamaterial sheet layer.

Preferably, the man-made pores are any or a combination of cylindrical pores, conical pores, circular-truncated-cone-like pores, trapezoidal pores and square pores.

Preferably, the man-made pores are formed on the substrate through high-temperature sintering, injection molding, stamping, or digitally controlled punching.

Preferably, the substrate is made of a ceramic material, a polymer material, a ferro-electric material, a ferrite material or a ferro-magnetic material.

Preferably, the polymer material includes polytetrafluoroethylene (PTFE), an epoxy resin, an F4B composite material or an FR-4 composite material.

Preferably, each of the metamaterial units is of a cubic or cuboidal form, and none of a length, a width and a height of the metamaterial unit is greater than one fifth of a wavelength of the incident electromagnetic wave.

The present disclosure changes electromagnetic parameters at each point of the metamaterial through punching or by attaching man-made microstructures so that the electromagnetic wave can be diverged after passing through the metamaterial. The metamaterial of the present disclosure features a simple manufacturing process and a low cost, and is easy to be implemented. Moreover, the metamaterial of the present disclosure has small dimensions and does not occupy a large space, so it is easy to miniaturize apparatuses made of the metamaterial of the present disclosure.

### BRIEF DESCRIPTION OF THE DRAWINGS

FIG. 1 is a schematic view illustrating the refractive index distribution of a metamaterial for diverging an electromagnetic wave of the present disclosure;
FIG. 2 is a schematic structural view of another implementation of a metamaterial sheet layer according to the present disclosure; and
FIG. 3 is a schematic structural view of a metamaterial comprising a plurality of metamaterial sheet layers shown in FIG. 2.

### DETAILED DESCRIPTION OF THE INVENTION

Hereinbelow, the present disclosure will be described in detail with reference to the attached drawings and embodiments thereof.

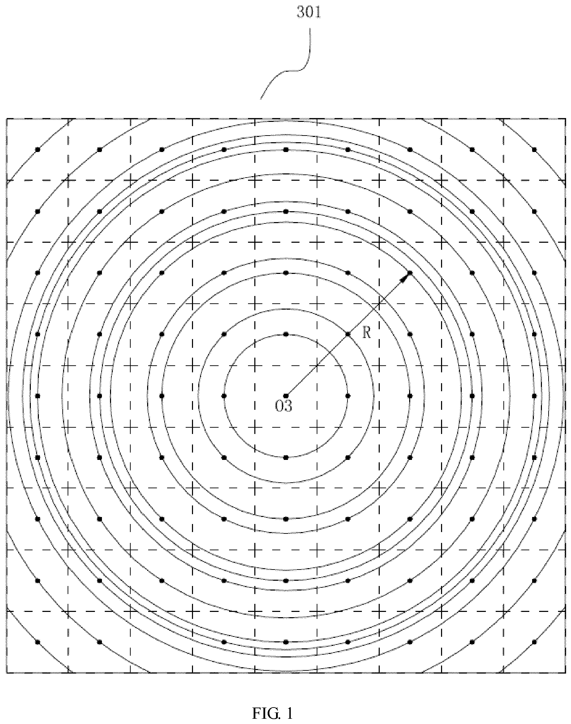

In the present disclosure, the refractive indices of the metamaterial 301 are shown in FIG. 1. The refractive indices of the metamaterial 301 are distributed in a circular form with a center 03 of the metamaterial 301, and the refractive indices remain unchanged at a same radius and increase gradually with the radius.

The refractive indices of the metamaterial 301 may vary in a linear way; that is, n_{R}=nₘᵢₙ+KR, where K represents a constant, R represents a radius (with the center 03 of the metamaterial 301 as a circle center), and nₘᵢₙ represents the minimum refractive index of the metamaterial 301 (i.e., the refractive index at the center 03 of the metamaterial 301). Additionally, the refractive indices of the metamaterial 301 may also vary in a squared way (i.e., n_{R}=nₘᵢₙ+KR²), a cubic way (i.e., n_{R}=nₘᵢₙ+KR³), or according to a power function (i.e., n_{R}=nₘᵢₙ*K^{R}).

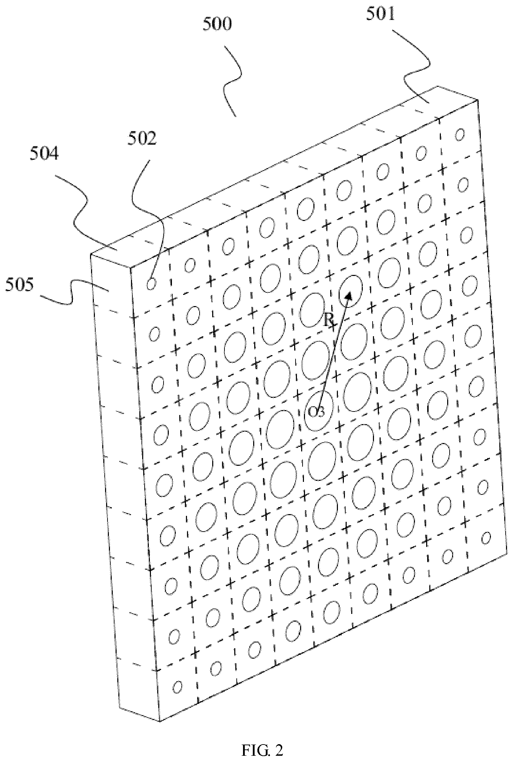

FIG. 2 illustrates another implementation of a metamaterial sheet layer 500 that has the refractive index distribution shown in FIG. 1. The metamaterial sheet layer 500 comprises a sheet substrate 501 and man-made pores 502 formed on the substrate 501. The metamaterial sheet layer 500 may be divided into a plurality of identical metamaterial units 504, each of which comprises a man-made pore 502 and a substrate unit 505 occupied by the man-made pore 502. The metamaterial sheet layer 500 has only one metamaterial unit 504 in the thickness direction. The metamaterial units 504 may be squares, cubes or cuboids that are completely identical to each other. A length, a width and a height of each of the metamaterial units 504 are all smaller than or equal to one fifth of the wavelength of the incident electromagnetic wave (usually one tenth of the wavelength of the incident electromagnetic wave) so that the entire metamaterial sheet layer has a continuous response to the electric field and/or the magnetic field of the electromagnetic wave. Preferably, each of the metamaterial units 504 is a cube whose side length is one tenth of the wavelength of the incident electromagnetic wave.

As shown in FIG. 2, the man-made pores of the metamaterial sheet layer 500 are all cylindrical pores. Taking the center 03 of the metamaterial sheet layer 500 as a circle center (the center 03 here is located in a central axis of the midmost man-made pore), the man-made pores 502 at a same radius have a same volume, and the man-made pores 502 gradually decrease in volume as the radius increases. The radius here refers to a distance from the respective metamaterial unit 504 to the center of the metamaterial sheet layer 500. Therefore, by filling each of the cylindrical pores with a medium material (e.g., air) having a refractive index which is smaller than that of the substrate, the refractive index distribution shown in FIG. 1 can be achieved. Of course, if the man-made pores 502 at a same radius have a same volume and the man-made pores 502 gradually increase in volume as the radius increases when the center 03 of the metamaterial sheet layer 500 is taken as a circle center, then each of the cylindrical pores must be filled with a medium material having a refractive index greater than that of the substrate in order to achieve the refractive index distribution shown in FIG. 1.

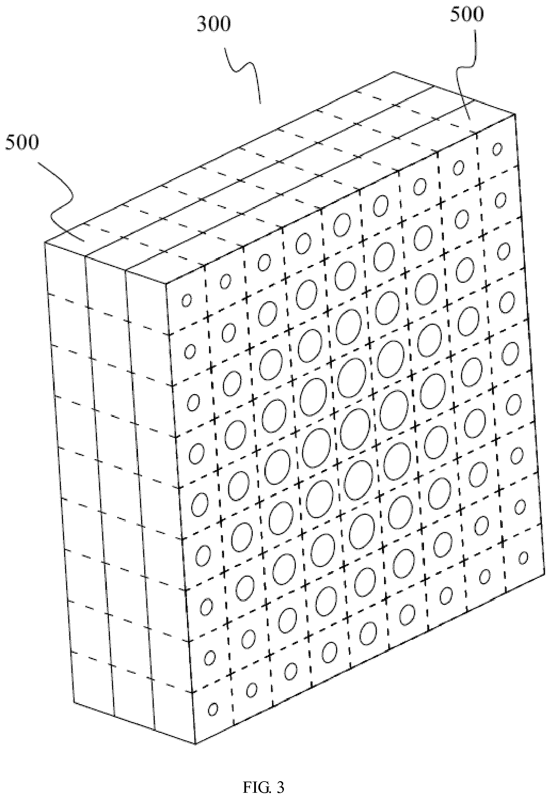

Of course, the metamaterial sheet layer is not merely limited to the aforesaid implementation. As an example, each of the man-made pores may be divided into multiple unit pores having a same volume; and the same objective can also be achieved by controlling the number of the unit pores in each substrate unit to control the volume of the man-made pore of each of the metamaterial units 504. As another example, the metamaterial sheet layer may also be implemented in the following form: all the man-made pores of a same metamaterial sheet layer have a same volume, but the medium material filled in the man-made pores has refractive indices distributed as shown in FIG. 3 (i.e., the medium material filled at a same radius has the same refractive index, and the refractive index of the medium material filled increases gradually with the radius).

The substrate 501 of the metamaterial sheet layer 500 is made of a ceramic material, a polymer material, a ferro-electric material, a ferrite material or a ferro-magnetic material. The polymer material may be chosen from PTFE, an epoxy resin, an F4B composite material, an FR-4 composite material and the like. For example, PTFE has excellent electric insulativity, and thus will not cause interference to the electric field of the electromagnetic wave; and PTFE has excellent chemical stability and corrosion resistance, and thus has a long service life.

The man-made pores 502 may be formed on the substrate through high-temperature sintering, injection molding, stamping, or digitally controlled punching. Of course, for substrates of different materials, the man-made pores are formed in different ways. For example, when the substrate is made of a ceramic material, the man-made pores are preferably formed on the substrate through high-temperature sintering; and when the substrate is made of a polymer material (e.g., PTFE or an epoxy resin), the man-made pores are preferably formed on the substrate through injection molding or stamping.

The man-made pores 502 may be any or a combination of cylindrical pores, conical pores, circular-truncated-cone-like pores, trapezoidal pores and square pores. Of course, the man-made pores 502 may be pores of other forms. The man-made pores in the metamaterial units 504 may be in the same form or different forms depending on different requirements. Of course, the pores of the entire metamaterial are preferably in the same form in order to make the manufacturing process easier.

The metamaterial 300 shown in FIG. 3 comprises a plurality of metamaterial sheet layers 500 shown in FIG. 2. There are shown three metamaterial sheet layers. Of course, the metamaterial 300 may be comprised of a different number of metamaterial sheet layers 500 depending on different requirements. The plurality of metamaterial sheet layers 500 are joined closely with each other, and this may be achieved through use of double-sided adhesive tapes or bolts.

The embodiments of the present disclosure have been described above with reference to the attached drawings; however, the present disclosure is not limited to the aforesaid embodiments, and these embodiments are only illustrative but are not intended to limit the present disclosure. Those of ordinary skill in the art may further devise many other implementations according to the teachings of the present disclosure, and all of the implementations shall fall within the present disclosure.

## Claims

1. A metamaterial (301, 300) for diverging an electromagnetic wave, comprising at least one metamaterial sheet layer (500), it is **characterized in that** refractive indices of the metamaterial sheet layer (500) are distributed in a circular form with a center (03) of the metamaterial sheet layer (500), and the refractive indices remain unchanged at a same radius (R) and the refractive indices increase gradually as the radius increases, wherein the metamaterial sheet layer (500) comprises a plurality of metamaterial units (504), each of the metamaterial units (504) comprises a substrate (501) and microstructures (502) disposed on the substrate (501), wherein the microstructures are man-made pores (502), wherein all the man-made pores are filled with a medium material having a refractive index which is different from that of the substrate, wherein said refractive index is based on the man-made pores volume.

2. The metamaterial of claim 1, wherein for a same one of the metamaterial sheet layer (500), all the man-made pores (502) are filled with a medium material having a refractive index which is smaller than that of the substrate (501), each of the metamaterial units (504) comprises one man-made pore (502), the man-made pores (502) of the metamaterial units (504) at a same radius (R) have a same volume, the man-made pores (502) gradually decrease in volume as the radius (R) increases, and the radius (R) represents a distance from the respective metamaterial unit (504) to the center (03) of the metamaterial sheet layer (500).

3. The metamaterial of claim 1, wherein for a same one of the metamaterial sheet layer (500), all the man-made pores (502) are formed of unit pores having a same volume and are filled with a medium material having a refractive index which is smaller than that of the substrate (501), a total volume of the man-made pores (502) is the same for each of the metamaterial units at a same radius (R), the number of the unit pores in each of the man-made pores (502) decreases gradually as the radius (R) increases, and the radius (R) represents a distance from the respective metamaterial unit (504) to the center (03) of the metamaterial sheet layer (500).

4. The metamaterial of claim 1, wherein for a same one of the metamaterial sheet layer (500), all the man-made pores (502) are filled with a medium material having a refractive index which is greater than that of the substrate (501), each of the metamaterial units (504) comprises one man-made pore (502), the man-made pores (502) of the metamaterial units (504) at a same radius (R) have the same volume, the man-made pores (502) gradually increase in volume as the radius (R) increases, and the radius (R) represents a distance from the respective metamaterial unit (504) to the center (03) of the metamaterial sheet layer (500).

5. The metamaterial of claim 1, wherein for a same one of the metamaterial sheet layer (500), all the man-made pores (502) are formed of unit pores having a same volume and are filled with a medium material having a refractive index which is greater than that of the substrate (501), a total volume of the man-made pores (502) is the same for each of the metamaterial units at a same radius (R), the number of the unit pores in each of the man-made pores increases gradually as the radius (R) increases, and the radius (R) represents a distance from the respective metamaterial unit (504) to the center (O3) of the metamaterial sheet layer (500).

6. The metamaterial of claim 1, wherein for a same one of the metamaterial sheet layer (500), the man-made pores (502) all have a same volume, the medium material filled at a same radius (R) has the same refractive index, the refractive index of the medium material filled in the man-made pores increases gradually with the radius (R) increasing gradually, and the radius (R) represents a distance from the respective metamaterial unit (504) to the center (O3) of the metamaterial sheet layer (500).

7. The metamaterial of claim 1, wherein the man-made pores (502) are any or a combination of cylindrical pores, conical pores, circular-truncated-cone-like pores, trapezoidal pores and square pores.

8. The metamaterial of claim 1, wherein the man-made pores (502) are formed on the substrate (501) through high-temperature sintering, injection molding, stamping, or digitally controlled punching.

9. The metamaterial of claim 1, wherein each of the metamaterial units (404, 504) is of a cubic or cuboidal form, and none of a length, a width and a height of the metamaterial unit (404, 504) is greater than one fifth of a wavelength of the incident electromagnetic wave.

## Patentansprüche

1. Metamaterial (301, 300) zum Divergierenlassen einer elektromagnetischen Welle, umfassend mindestens eine Metamaterialschicht (500), die **dadurch gekennzeichnet ist, dass** die Brechungsindizes der Metamaterialschicht (500) kreisförmig mit einem Zentrum (O3) der Metamaterialschicht (500) verteilt sind und die Brechungsindizes bei einem gleichen Radius (R) unverändert bleiben und die Brechungsindizes mit zunehmendem Radius allmählich zunehmen, wobei die Metamaterialschicht (500) eine Vielzahl von Metamaterialeinheiten (504) umfasst, jede der Metamaterialeinheiten (504) ein Substrat (501) und auf dem Substrat (501) angeordnete Mikrostrukturen (502) umfasst, wobei die Mikrostrukturen künstliche Poren (502) sind, wobei alle künstlichen Poren mit einem Mediummaterial mit einem Brechungsindex, der sich von dem des Substrats unterscheidet, gefüllt sind, wobei der Brechungsindex auf dem Volumen der künstlichen Poren basiert.

2. Metamaterial nach Anspruch 1, wobei für dieselbe Metamaterialschicht (500) alle künstlichen Poren (502) mit einem Mediummaterial gefüllt sind, das einen Brechungsindex aufweist, der kleiner als der des Substrats (501) ist, jede der Metamaterialeinheiten (504) eine künstliche Pore (502) umfasst, die künstlichen Poren (502) der Metamaterialeinheiten (504) bei einem gleichen Radius (R) ein gleiches Volumen aufweisen, das Volumen der künstlichen Poren (502) mit zunehmendem Radius (R) allmählich abnimmt und der Radius (R) einen Abstand von der jeweiligen Metamaterialeinheit (504) zum Zentrum (O3) der Metamaterialschicht (500) darstellt.

3. Metamaterial nach Anspruch 1, wobei für dieselbe Metamaterialschicht (500) alle künstlichen Poren (502) aus Einheitsporen gebildet sind, die ein gleiches Volumen aufweisen, und mit einem Mediummaterial gefüllt sind, das einen Brechungsindex aufweist, der kleiner als der des Substrats (501) ist, ein Gesamtvolumen der künstlichen Poren (502) für jede der Metamaterialeinheiten bei einem gleichen Radius (R) gleich ist, die Anzahl der Einheitsporen in jeder der künstlichen Poren (502) mit zunehmendem Radius (R) allmählich abnimmt und der Radius (R) einen Abstand von der jeweiligen Metamaterialeinheit (504) zum Zentrum (O3) der Metamaterialschicht (500) darstellt.

4. Metamaterial nach Anspruch 1, wobei für dieselbe Metamaterialschicht (500) alle künstlichen Poren (502) mit einem Mediummaterial gefüllt sind, das einen Brechungsindex aufweist, der größer als der des Substrats (501) ist, jede der Metamaterialeinheiten (504) eine künstliche Pore (502) umfasst, die künstlichen Poren (502) der Metamaterialeinheiten (504) bei einem gleichen Radius (R) das gleiche Volumen aufweisen, das Volumen der künstlichen Poren (502) mit zunehmendem Radius (R) allmählich zunimmt, und der Radius (R) einen Abstand von der jeweiligen Metamaterialeinheit (504) zum Zentrum (O3) der Metamaterialschicht (500) darstellt.

5. Metamaterial nach Anspruch 1, wobei für dieselbe Metamaterialschicht (500) alle künstlichen Poren (502) aus Einheitsporen gebildet sind, die ein gleiches Volumen aufweisen, und mit einem Mediummaterial gefüllt sind, das einen Brechungsindex aufweist, der größer als der des Substrats (501) ist, ein Gesamtvolumen der künstlichen Poren (502) für jede der Metamaterialeinheiten bei einem gleichem Radius (R) gleich ist, die Anzahl der Einheitsporen in jeder der künstlichen Poren mit zunehmendem Radius (R) allmählich zunimmt und der Radius (R) einen Abstand von der jeweiligen Metamaterialeinheit (504) zum Zentrum (O3) der Metamaterialplattenschicht (500) darstellt.

6. Metamaterial nach Anspruch 1, wobei für dieselbe Metamaterialschicht (500) die künstlichen Poren (502) alle ein gleiches Volumen aufweisen, das an einem gleichen Radius (R) gefüllte Mediummaterial den gleichen Brechungsindex aufweist, der Brechungsindex des in die künstlichen Poren gefüllten Mediummaterials mit allmählich zunehmendem Radius (R) allmählich zunimmt und der Radius (R) einen Abstand von der jeweiligen Metamaterialeinheit (504) zum Zentrum (O3) der Metamaterialschicht (500) darstellt.

7. Metamaterial nach Anspruch 1, wobei die künstlichen Poren (502) eine oder eine Kombination von zylindrischen Poren, konischen Poren, kreisrundkegelstumpfförmigen Poren, trapezförmigen Poren und quadratischen Poren sind.

8. Metamaterial nach Anspruch 1, wobei die künstlichen Poren (502) auf dem Substrat (501) durch Hochtemperatursintern, Spritzgießen, Stanzen oder digital gesteuertes Stanzen ausgebildet werden.

9. Metamaterial nach Anspruch 1, wobei jede der Metamaterialeinheiten (404, 504) eine kubische oder quaderförmige Form aufweist und keine von einer Länge, einer Breite und einer Höhe der Metamaterialeinheit (404, 504) größer als ein Fünftel einer Wellenlänge der einfallenden elektromagnetischen Welle ist.

## Revendications

1. Un métamatériau (301, 300) destiné à diverger une onde électromagnétique, comprenant au moins une couche de feuille de métamatériau (500), lequel est **caractérisé en ce que** des indices de réfraction de la couche de feuille de métamatériau (500) sont distribués dans une forme circulaire avec un centre (O3) de la couche de feuille de métamatériau (500), et les indices de réfraction restent inchangés à un même rayon (R) et les indices de réfraction augmentent progressivement à mesure que le rayon augmente, dans lequel la couche de feuille de métamatériau (500) comprend une pluralité d'unités de métamatériau (504), chacune des unités de métamatériau (504) comprend un substrat (501) et des microstructures (502) disposées sur le substrat (501), dans lequel les microstructures sont des pores artificiels (502), dans lequel tous les pores artificiels sont remplis d'un matériau de charge ayant un indice de réfraction qui est différent de celui du substrat, dans lequel ledit indice de réfraction est basé sur le volume des pores artificiels.

2. Le métamatériau selon la revendication 1, dans lequel pour une même couche de la couche de feuille de métamatériau (500), tous les pores artificiels (502) sont remplis d'un matériau de charge ayant un indice de réfraction qui est plus faible que celui du substrat (501), chacune des unités de métamatériau (504) comprend un pore artificiel (502), les pores artificiels (502) des unités de métamatériau (504) à un même rayon (R) ont un même volume, les pores artificiels (502) diminuent progressivement en volume à mesure que le rayon (R) augmente, et le rayon (R) représente une distance allant de l'unité de métamatériau respective (504) au centre (O3) de la couche de feuille de métamatériau (500).

3. Le métamatériau selon la revendication 1, dans lequel pour une même couche de la couche de feuille de métamatériau (500), tous les pores artificiels (502) sont formés de pores unitaires ayant un même volume et sont remplis d'un matériau de charge ayant un indice de réfraction qui est plus faible que celui du substrat (501), un volume total des pores artificiels (502) est le même pour chacune des unités de métamatériau à un même rayon (R), le nombre des pores unitaires dans chacune des pores artificiels (502) diminue progressivement à mesure que le rayon (R) augmente, et le rayon (R) représente une distance allant de l'unité de métamatériau respective (504) au centre (O3) de la couche de feuille de métamatériau (500).

4. Le métamatériau selon la revendication 1, dans lequel pour une même couche de la couche de feuille de métamatériau (500), tous les pores artificiels (502) sont remplis d'un matériau de charge ayant un indice de réfraction qui est plus élevé que celui du substrat (501), chacune des unités de métamatériau (504) comprend un pore artificiel (502), les pores artificiels (502) des unités de métamatériau (504) à un même rayon (R) ont le même volume, les pores artificiels (502) augmentent progressivement en volume à mesure que le rayon (R) augmente, et le rayon (R) représente une distance allant de l'unité de métamatériau respective (504) au centre (O3) de la couche de feuille de métamatériau (500).

5. Le métamatériau selon la revendication 1, dans lequel pour une même couche de la couche de feuille de métamatériau (500), tous les pores artificiels (502) sont formés de pores unitaires ayant un même volume et sont remplis d'un matériau de charge ayant un indice de réfraction qui est plus élevé que celui du substrat (501), un volume total des pores artificiels (502) est le même pour chacune des unités de métamatériau à un même rayon (R), le nombre des pores unitaires dans chacune des pores artificiels augmente progressivement à mesure que le rayon (R) augmente, et le rayon (R) représente une distance allant de l'unité de métamatériau respective (504) au centre (O3) de la couche de feuille de métamatériau (500).

6. Le métamatériau selon la revendication 1, dans lequel pour une même couche de la couche de feuille de métamatériau (500), les pores artificiels (502) ont tous un même volume, le matériau de charge rempli à un même rayon (R) a le même indice de réfraction, l'indice de réfraction du matériau de charge rempli dans les pores artificiels augmente progressivement avec le rayon (R) augmentant progressivement, et le rayon (R) représente une distance allant de l'unité de métamatériau respective (504) au centre (O3) de la couche de feuille de métamatériau (500).

7. Le métamatériau selon la revendication 1, dans lequel les pores artificiels (502) sont soit un pore quelconque, soit une combinaison parmi des pores cylindriques, pores coniques, pores de type coniques tronqués circulaires, pores trapézoïdaux et pores carrés.

8. Le métamatériau selon la revendication 1, dans lequel les pores artificiels (502) sont formés sur le substrat (501) par le biais d'un frittage à haute température, d'un moulage par injection, d'un estampage ou d'un poinçonnage commandé numériquement.

9. Le métamatériau selon la revendication 1, dans lequel chacune des unités de métamatériau (404, 504) est d'une forme cubique ou cuboïde, et ni une longueur, ni une largeur, ni une hauteur de l'unité de métamatériau (404, 504) n'est supérieure d'un cinquième d'une longueur d'onde de l'onde électromagnétique incidente.
